(19) Europäisches Patentamt
European Patent Office
Office européen des brevets

(11) Veröffentlichungsnummer: **0 003 097**
**B1**

(12) **EUROPÄISCHE PATENTSCHRIFT**

(21) Anmeldenummer: **79100003.7**

(22) Anmeldetag: **02.01.79**

(51) Int. Cl.³: **C 07 C 118/00,**
C 07 C 143/68,
C 08 G 18/77

(54) **Verfahren zur Herstellung von modifizierten, Sulfonsäurealkylestergruppen aufweisenden Polyisocyanaten und ihre Verwendung zur Herstellung von Polyadditionsprodukten**

(30) Priorität: **12.01.78 DE 2801129**

(43) Veröffentlichungstag der Anmeldung:
**25.07.79 Patentblatt 79/15**

(45) Bekanntmachung des Hinweises auf die Patenterteilung:
**23.07.80 Patentblatt 80/15**

(84) Benannte Vertragsstaaten:
**BE DE FR GB IT NL**

(56) Entgegenhaltungen:
**DE - A - 2 227 111**
**FR - A - 2 370 064**

(73) Patentinhaber: **Bayer AG**
**Zentralbereich Patente, Marken und Lizenzen**
**D - 5090 Leverkusen 1, Bayerwerk (DE)**

(72) Erfinder: **Dieterich, Dieter, Dr.**
**Ludwig-Girtler Strasse 1**
**D - 5090 Leverkusen (DE)**

**EP 0 003 097 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren zur Herstellung von modifizierten, Sulfonsäurealkylestergruppen aufweisenden Polyisocyanaten und ihre Verwendung zur Herstellung von Polyadditionsprodukten

Sulfonsäuren aromatischer Di- bzw. Polyisocyanate sind bekannt (vgl. z.B. DT—OS 2 227 111, DT—OS 2 359 615 oder US—PS 3 826 769). Sie werden in einfacher Weise durch Umsetzung entsprechender aromatischer Di- bzw. Polyisocyanate mit Sulfonierungsmitteln wie Schwefeltrioxid, Addukten des Schwefeltrioxids, Oleum, Chlorsulfonsäure oder Schwefelsäure erhalten.

Je nach verwendetem Isocyanat und dem Grad der Sulfonierung sowie der Natur des Sulfonierungsmittels können feste, harzartige oder pulverförmige Sulfonierungsprodukte oder Lösungen bzw. Dispersionen der sulfonierten Isocyanate in unverändertem Ausgangsmaterial erhalten werden.

Die Herstellung von Polyurethanen oder Polyurethanharnstoffen auf der Basis von Polyisocyanaten mit Sulfonsäuregruppen ist z.B. in der US—PS 3 826 769 und der DT—OS 2 359 611 beschrieben. In dieser Weise durch Sulfonsäure- oder Sulfonatgruppen modifizierte Polyurethane und Polyharnstoffe weisen häufig eine beträchtliche Hydrophilie auf, weshalb der Gehalt an Sulfonsäuregruppen im allgemeinen so gering wie möglich gehalten wird. Aus diesem Grund sind teilweise sulfonierte Polyisocyanate bzw. Lösungen von Isocyanatosulfonsäuren in Polyisocyanaten von besonderer Bedeutung. Der wesentliche Vorteil sulfonierter Polyisocyanate liegt in der hohen Polarität der Sulfonsäuregruppen begründet. Dadurch ergeben sich ausgeprägte Wechselwirkungen bzw. Haftkräfte gegenüber polaren Medien und Substraten, wie Wasser, feuchten und polaren Oberflächen, insbesondere solchen anorganischer Art.

Andererseits weisen chemisch einheitliche oder persulfonierte Isocyanatosulfonsäuren hohe Schmelzpunkte, schlechte Löslichkeit in organischen Medien und eine außerordentliche Empfindlichkeit gegenüber Wasser und Luftfeuchtigkeit auf. Dies erschwert die Verarbeitbarkeit dieser Produkte. Darüber hinaus stört häufig der stark saure Charakter. Verfärbung und vorzeitiger Abbau daraus hergestellter Polyurethane erschweren den praktischen Einsatz der Produkte. Zwar lassen sich diese Erscheinungen durch geeignete Neutralisationsmaßnahmen vermeiden, doch wird die Hydrophilie der Produkte dadurch erhöht.

Es besteht daher der Wunsch nach Polyisocyanaten, welche einerseits polaren Charakter und die damit verbundenen Vorteile, wie geringen Dampfdruck, bessere Hafteigenschaften besitzen, die jedoch andererseits überwiegend hydrophoben Charakter aufweisen.

Weiterhin besteht der Wunsch, leicht zugängliche aromatische Polyisocyanate zur Verfügung zu haben, welche beim hydrolytischen Abbau der daraus aufgebauten Oligomeren und Polymeren toxikologisch unbedenkliche Produkte liefern.

Eine Lösung dieser Probleme ist Inhalt der vorliegenden Erfindung. Überraschenderweise wurde nämlich gefunden, daß bei der Umsetzung aromatischer Polyisocyanato-Sulfonsäuren mit Di- oder Tetrahydrofuranen unter Molekulargewichtserhöhung neuartige aromatische Polyisocyanate erhalten werden, welche durch die Anwesenheit von Sulfonsäureester-Gruppen charakterisiert sind.

Die neuen erfindungsgemäßen Polyisocyanate besitzen gegenüber bisher bekannten Polyisocyanaten eine Reihe von vorteilhaften Eigenschaften:

1. Sie besitzen stark polaren Charakter, außerordentlich niedrigen Dampfdruck und sind hervorragend verträglich mit einer Vielzahl polarer und apolarer Medien und Reaktionspartner.

2. In Abhängigkeit von chemischer Natur und Menge des verwendeten Di- oder Tetrahydrofurans läßt sich die Hydrophilie der Produkte in weiten Grenzen steuern. Bei vollständiger Umsetzung der Sulfonsäure-Gruppen mit Di- oder Tetrahydrofuranen erhält man hydrophobe Polyisocyanate.

3. Der hydrolytische Abbau der Produkte führt zu toxikologisch unbedenklichen Polyaminosulfonsäuren.

4. Durch die Umsetzung kann die Funktionalität der erfindungsgemäßen Polyisocyanate erhöht werden; insbesondere lassen sich erfindungsgemäß aus bifunktionellen Isocyanaten höherfunktionelle Polyisocyanate mit geringem Dampfdruck herstellen.

5. Die Verwendung der erfindungsgemäßen Polyisocyanate beispielsweise bei der Herstellung von Polyurethanen führt zu Polymeren mit verbessertem Brandverhalten.

Überraschenderweise reagieren Di- oder Tetrahydrofurane mit Isocyanato-Sulfonsäuren zumindest anteilweise wie bifunktionelle Verbindungen. Es wird angenommen, daß zunächst in einer raschen Reaktion durch die Sulfonsäuregruppe der Di- oder Tetrahydrofuran-Ring geöffnet wird, wobei eine Hydroxy-Gruppe entsteht, die ihrerseits in einer langsameren Reaktion mit einer Isocyanatgruppe reagiert. Auf diese Weise wird also nicht nur eine Modifizierung der Sulfonsäuregruppe zu einer hydrophoben Sulfonsäure-estergruppe erreicht, sondern diese Reaktion führt gleichzeitig zu einem Kettenaufbau bzw. einer Kettenverknüpfung durch eine Arylsulfonsäureurethanalkylester-Gruppe. Lediglich bei Einsatz sterisch gehinderter cyclischer Äther, wie z.B. 2.2.5.5.-Tetramethyl-tetrahydrofuran ist anzunehmen, daß die Reaktion auf der Stufe eines Hydroxyalkylester stehen bleibt.

Gegenstand der vorliegenden Erfindung ist somit ein Verfahren zur Herstellung von modifizierten, Sulfonsäurealkylester-Gruppen aufweisenden Polyisocyanaten, deren Isocyanatgruppen zumindest teilweise in dimerisierter Form vorliegen können, dadurch gekennzeichnet, daß man mindestens zwei Isocyanatgruppen aufweisende Isocyanatoarylsulfonsäuren, deren Isocyanatgruppen zumindest teilweise in dimerisierter Form vorliegen können, gegebenenfalls im Gemisch mit Sulfonsäuregruppen-freien Mono- und/oder Polyisocyanaten bei 0—190°C mit Di- und/oder Tetrahydrofuranen umsetzt, wobei man Art und Mengenverhältnisse der Reaktionspartner so wählt, daß das Äquivalentverhältnis der Gesamtmenge der Isocyanatgruppen einschließlich der gegebenenfalls in dimerisierter Form vorliegenden Isocyanatgruppen zu Sulfonsäuregruppen $>1$ ist und das Äquivalentverhältnis von Di- bzw. Tetrahydrofurangruppen zu Sulfonsäuregruppen zwischen 0,1 und 10 liegt.

Gegenstand der vorliegenden Erfindung ist auch die Verwendung der nach dem erfindungsgemäßen Verfahren zugänglichen modifizierten Polyisocyanate als Ausgangsmaterialien zur Herstellung von oligomeren oder polymeren Polyadditionsprodukten.

Bei der Durchführung des erfindungsgemäßen Verfahrens erfolgt in eimen ersten reaktionsschritt zunächst eine Addition des Di- oder Tetrahydrofurans an die Sulfonsäuregruppe der aromatischen Isocyanatosulfonsäure unter Ausbildung von Isocyanatoarylsulfonsäure-hydroxyalkyl-estern. So reagiert beispielsweise Diisocyanatobenzolsulfonsäure (I) mit Tetrahydrofuran (II) in der ersten Reaktionsstufe des erfindungsgemäßen Verfahrens zum entsprechenden Diisocyanatobenzolsulfonsäurehydroxyalkylester (III):

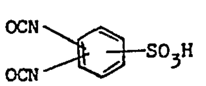
+
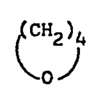

(I) (II)

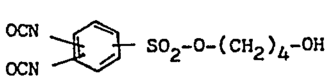

(III)

Bei Verwendung unterschüssiger Mengen von Di- bzw. Tetrahydrofuranen entstehen in der ersten Reaktionsstufe des erfindungsgemäßen Verfahrens Gemische, welche auch nicht umgesetzte Isocyanatoarylsulfonsäure enthalten.

Falls nun die in der ersten Reaktionsstufe gebildete Hydroxylgruppe nicht durch beispielsweise sterische Hinderung an einer Weiterreaktion gehindert ist, entstehen bei der Durchführung des erfindungsgemäßen Verfahrens in einer zweiten Reaktionsstufe (überschüssige) Isocyanatgruppen, Sulfonsäurealkylester-Gruppen und Urethangruppen aufweisende Verbindungen. So kann beispielsweise obiges Zwischenprodukt (III) mit sich selbst unter Kettenverlängerungsreaktion zu höhermolekularen Verbindungen der Formel (IV) weiter reagieren:

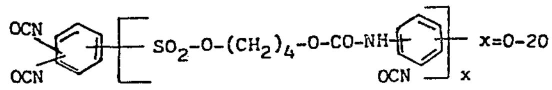

(IV)

wobei im Reaktionsgemisch vorliegende Hydroxylgruppen-freie Isocyanate (entweder bislang an der Umsetzung nicht beteiligte Isocyanatoarylsulfonsäuren oder ggf. im Reaktionsgemisch ebenfalls vorliegende Sulfonsäuregruppen-freie Mono- oder Polyisocyanate) einen Kettenabbruch unter Ausbildung von Endgruppen der Formel (V)

$$—SO_2—O—(CH_2)_4—O—CO—NH—R$$

(V)

bewirken, wobei R für den Rest steht, wie er durch Entfernung einer Isocyanatgruppe aus einem Hydroxylgruppen-freien Mono- oder Polyisocyanat entsteht.

Wie leicht ersichtlich, richtet sich die Größe des Index' x nach Art und Mengenverhältnis der eingesetzten Ausgangsmaterialien. So entstehen während der zweiten Stufe des erfindungsgemäßen Verfahrens bei Verwendung von Polyisocyanatoarylsulfonsäuren als ausschließliche Isocyanat-Komponente zusammen mit äquivalenten oder überschüssigen Mengen an Di- bzw. Tetrahydrofuranen vergleichsweise höhermolekulare Verbindungen, während bei Verwendung unterschüssiger Mengen an Di- bzw. Tetrahydrofuranen und/oder bei Mitverwendung von Sulfonsäuregruppen-freien Mono- oder Polyisocyanaten vergleichsweise niedermolekulare Verbindungen, in denen x auch gleich 0 sein kann, gebildet werden.

In Abhängigkeit der Reaktivität der eingesetzten Ausgangsisocyanate und in Abhangigkeit von den Reaktionsbedingungen, insbesondere von der Reaktionstemperatur, können beim erfindungsgemäßen Verfahren in einer evtl. dritten Reaktionsstufe durch Addition von Isocyanatgruppen an die Urethangruppen auch Allophanatgruppen aufweisende Derivate entstehen. Eine weitere Variationsmöglichkeit des erfindungsgemäßen Verfahrens besteht darin, höherfunktionelle Di- bzw. Tetrahydrofurane, d.h. Verbindungen, welche mehr als eine Di- bzw. Tetrahydrofurangruppe aufweisen, einzusetzen. Hierbei entstehen entsprechend obigem beispielhaften Formelschema verzweigte Produkte, da beispielsweise zwei Mol einer Monosulfonsäure mit einem Mol eines Bis-(tetrahydrofurans) in der ersten Reaktionsstufe zu einem 2-Hydroxyalkylgruppen aufweisenden Derivat reagieren würden, welches dann entsprechend den oben gemachten Ausführungen zu höherverzweigten Derivaten weiter reagiert. Aus dem bisher Gesagten ist leicht ersichtlich, daß bei der Durchführung des erfindungsgemäßen Verfahrens die Molekülgröße und der Verzweigungsgrad und damit die Viskosität und die NCO-Funktionalität der erfindungsgemäßen Verfahrensprodukte auf einfache Weise durch geeignete Auswahl der Ausgangssubstanzen, deren Mengenverhältnisse und der Reaktionsbedingungen, d.h. insbesondere der Reaktionstemperatur (Allophanatbildung) eingestellt werden kann. Diese Feststellung rechtfertigt sich insbesondere auch im Hinblick auf den Umstand, daß anstelle der oben beispielhaft genannten Ausgangsmaterialien alle beliebigen, nachstehend beispielhaft erwähnten Ausgangsmaterialien, d.h. insbesondere Isocyanatoarylsulfonsäuren, Di- oder Tetrahydrofuran und Sulfonsäuregruppen-freie Mono- oder Polyisocyanate eingesetzt werden können.

Beim erfindungsgemäßen Verfahren entstehen somit vorzugsweise modifizierte Polyisocyanate, die neben Isocyanatgruppen und Sulfonsäurealkylestergruppen gegebenenfalls noch freie Sulfonsäuregruppen sowie gegebenenfalls Urethan- und/oder Allophanatgruppen aufweisen. Lediglich im Falle der Verwendung von sterisch gehinderten Di- oder Tetrahydrofuranen entstehen beim erfindungsgemäßen Verfahren modifizierte Polyisocyanate, welche keine Urethan- bzw. Allophanatgruppen aufweisen. Da die als Ausgangsmaterialien eingesetzten Isocyanatoarylsulfonsäuren oft in zumindest teilweise dimerisierter Form (Uretdione) vorliegen, handelt es sich auch bei den erfindungsgemäßen modifizierten Polyisocyanaten um solche, deren Isocyanatgruppen gegebenenfalls zumindest teilweise dimerisiert sind.

Die bevorzugten, nach dem erfindungsgemäßen Verfahren zugänglichen modifizierten Polyisocyanate sind gekennzeichnet durch

a) einen Gehalt an, gegebenenfalls in dimerisierter Form vorliegenden, Isocyanatgruppen von 4 bis 48, vorzugsweise 10 bis 40 Gew.—%,

b) einen Gehalt an, Bestandteil einer Arylsulfonsäurealkylester-Gruppe bildenden, $-SO_2-O$-Gruppen von 0,3 bis 38 Gew.—% vorzugsweise 0,6—28 Gew.—%,

c) einen Gehalt an Sulfonsäuregruppen $-SO_3H$ von 0 bis 36, vorzugsweise 0 bis 10 Gew.—%.

d) einen Gehalt an Urethangruppen

—NH—CO—O—

von 0 bis vorzugsweise 0,2 bis 20 Gew.—% und

e) einen Gehalt an Allophanatgruppen

H
|
—NH—CO—N—CO—O—

von 0 bis 28, vorzugsweise 0,2 bis 20 Gew.—%,

wobei die Gesamtmenge der unter d) und e) genannten Gruppen mindestens 0,4 Gew.—% und höchstens 28 Gew.—% und wobei die Gesamtmenge der unter b) und c) genannten Gruppen zusammen höchstens 38 Gew.—% beträgt.

Beim erfindungsgemäßen Verfahren können als Isocyanatoarylsulfonsäuren die Sulfonierungsprodukte aller bekannten aromatischen Polyisocyanate eingesetzt werden. Ferner ist es möglich, beliebige Mischungen bekannter Polyisocyanate zu verwenden.

Geeignet sind auch Phosgenierungsprodukte von Kondensaten von Anilin und Aldehyden oder Ketonen, wie z.B. Acetaldehyd, Propionaldehyd, Butyraldehyd, Aceton, Methyläthylketon. Ferner geeignet sind die Phosgenierungsprodukte von Kondensaten von am Kern Alkyl substituierten Anilinen, insbesondere Toluidinen mit Aldehyden oder Ketonen, wie z.B. Formaldehyd, Acetaldehyd, Butyraldehyd, Aceton, Methyläthylketon.

Weiterhin geeignet sind Unsetzungsprodukte der genannten aromatischen Polyisocyanatgemische mit 0,2—50 Mol—% an Polyolen, vorausgesetzt, daß die Viskosität der so erhaltenen Umsetzungsprodukte 50 000 cP bei 25°C nicht überschreitet und der NCO-Gehalt der Umsetzungsprodukte mindestens 6 Gew.—% beträgt. Geeignete Polyole zur Modifizierung der Ausgangsmaterialien sind insbesondere die in der Polyurethan-Chemie bekannten Polyäther- und/oder Polyesterpolyole des Molekulargewichtsbereichs 200 bis 6000, vorzugsweise 300 bis 4000, sowie niedermolekulare Polyole des Molekulargewichtsbereichs 62 bis 200. Beispiele derartiger niedermolekularer Polyole sind Äthylenglykol, Propylenglykol, Glyzerin, Trimethylolpropan, 1,4,6-Hexantriol.

Besonders bevorzugte Isocyanatoaryl-sulfonsäuren sind die Sulfonierungsprodukte von 2,4-Toluylendiisocyanat sowie Gemischen aus 2,4- und 2,6-Toluylendiisocyanat, ferner Sulfonierungsprodukte der Di- bzw. Polyisocyanate, welche durch Phosgenierung von Anilin/Formaldehyd-Kondensaten erhalten werden. Diese Gemische enthalten insbesondere 4,4'-Diisocyanatodiphenylmethan und 2,4'-Diisocyanatodiphenylmethan sowie

höherkernige Homologe dieser Produkte.

Besonders bevorzugt sind Lösungen und Dispersionen von Isocyanato-aryl-sulfonsäuren in nichtsulfonierten flüssigen Polyisocyanaten. Solche Produkte werden beispielsweise bei teilweiser Sulfonierung aromatischer Polyisocyanate erhalten. Im allgemeinen erhält man bei der Teilsulfonierung von chemisch einheitlichen Diisocyanaten oder von binären Isomerengemischen Suspensionen, während bei der Teilsulfonierung von Mehrkomponenten-Gemischen homogene Lösungen entstehen. Für das erfindungsgemäße Verfahren ist es grundsätzlich ohne Belang, ob Lösungen oder Suspensionen eingesetzt werden. Ganz besonders bevorzugt sind teilsulfonierte Polyisocyanatgemische, wie sie durch Phosgenierung von Anilin-Formaldehyd-Kondensaten erhalten werden und in den deutschen Offenlegungsschriften 2 227 111, 2 359 614 und 2 359 615 beschrieben sind. Ebenfalls besonders bevorzugt sind Suspensionen von Diisocyanatotoluol-sulfonsäure-Dimeren sowie Diisocyanatodiphenylmethan-sulfonsäure-Dimeren in Diisocyanatotoluol bzw. Diisocyanatodiphenylmethan.

Die Herstellung der beim erfindungsgemäßen Verfahren einzusetzenden Isocyanatoarylsulfonsäuren bzw. ihrer Gemische mit nicht sulfonierten aromatischen Polyisocyanaten erfolgt nach den bekannten Verfahren des Standes der Technik bzw. in Analogie zu den bekannten Verfahren des Standes der Technik wie er sich beispielsweise aus den bereits genannten Veröffentlichungen, oder aus US—PS 3 826 769 ergibt. Die Verfahren der deutschen Patentanmeldungen P 25 24 476.2 oder P 26 15 876.9 sind zur Herstellung von beim erfindungsgemäßen Verfahren einsetzbaren Isocyanatoarylsulfonsäuren ebenfalls geeignet.

Es ist auch möglich, beim erfindungsgemäßen Verfahren Lösungen bzw. Suspensionen der beispielhaft genannten Isocyanatoarylsulfonsäuren in aliphatischen Polyisocyanaten wie z.B. Tetramethylendiisocyanat oder Hexamethylendiisocyanat und/oder in cycloaliphatischen bzw. gemischt aliphatischcycloaliphatischen Polyisocyanaten wie z.B. 4,4'-Diisocyanato-dicyclohexylmethan, 2,4- bzw. 2,6-Diisocyanato-hexahydrotoluol oder 1-Isocyanato - 3,3,5 - trimethyl - 5 - isocyanatomethylcyclohexan einzusetzen. Falls eine Erniedrigung der NCO-Funktionalität der erfindungsgemäßen Verfahrensprodukte erwünscht ist, können auch Lösungen bzw. Suspensionen der Isocyanato-arylsulfonsäuren in aromatischen, aliphatischen oder cycloaliphatischen Monoisocyanaten zum Einsatz gelangen. Beispiele für die letztgenannten Verbindungen sind Phenylisocyanat, Tosylisocyanat, n-Hexylisocyanat, 6-Chlor-hexylisocyanat, Cyclohexylisocyanat oder Methoxymethylisocyanat. Grundsätzlich denkbar ist auch der Einsatz von sulfonierten aromatischen Monoisocyanaten, wie z.B. Phenylisocyanat als Isocyanatoarylsulfonsäure in Kombination mit nicht sulfonierten Polyisocyanaten der beispielhaft genannten Art. Die Art und Mengenverhältnisse der beim erfindungsgemäßen Verfahren einzusetzenden Isocyanate, sowie der Sulfonierungsgrad werden so gewählt, daß das Äquivalentverhältnis von gegebenenfalls teilweise in dimerisierter Form vorliegenden Isocyanatgruppen und Sulfonsäuregruppen >1:1, d.h. insbesondere zwischen 1,05:1 und 50:1, vorzugsweise zwischen 2:1 und 30:1, liegt.

Reaktionspartner für die Isocyanatoarylsulfonsäuren beim erfindungsgemäßen Verfahren sind beliebige Di- und/oder Tetrahydrofurane, insbesondere Tetrahydrofuran, Mono- und Di-$C_1$—$C_4$-Alkyltetrahydrofurane, Tetrahydrofurfurylalkohol, sowie 2,5-Dihydrofuran. Unsubstituiertes Tetrahydrofuran ist besonders bevorzugt geeignet. Zu den geeigneten bzw. besonders bevorzugt geeigneten Furan-Derivaten gehören beispielsweise 2-Methyltetrahydrofuran, 2,5-Dimethyltetrahydrofuran, 3,3-Dimethyltetrahydrofuran, 3,4-Dimethyltetrahydrofuran, 2-Phenyltetrahydrofuran, 3,4-Diphenyltetrahydrofuran, 2,3-Dichlortetrahydrofuran, Tetrahydrofurfurylalkohol, und dessen $C_1$—$C_6$-Alkyläther, sowie dessen Ester mit z.B. Essigsäure, Buttersäure, Acrylsäure, Methacrylsäure, Benzoesäure, 2,2,5,5-Tetramethyltetrahydrofuran, 2-Methyl-2-isopropenyltetrahydrofuran, 2-Äthyl-2-vinyltetrahydrofuran, 2,2,5,5-Bis-(pentamethylen)-tetrahydrofuran, 2,5-Dimethyl-2-hydroxymethyltetrahydrofuran, 5-Methyl-2-brommethyltetrahydrofuran, 2.5-Bis-(hydroxymethyl)-tetrahydrofuran, 2,5-Bis-(chlormethyl)-tetrahydrofuran, 2,2-Dimethyl-5-bromtetrahydrofuran, 7-Oxa-spiro-[4,4]-decan, 2,5-Dihydrofuran, 2,5-Dimethyl-2,5-dihydrofuran, 7-Oxadispiro-[5,1,5,2]-pentadecan-(1,4), 2,2,5,5-Tetramethyl-2,5-dihydrofuran, 4,5-Dihydrofuran, 4-Methyl-4,5-dihydrofuran, 2-Methyl-4,5-dihydrofuran.

Die beim erfindungsgemäßen Verfahren zum Einsatz gelangenden Di- oder Tetrahydrofurane bzw. deren Mengen werden so gewählt, daß das Äquivalentverhältnis der Di- oder Tetrahydrofuran-Gruppen zu Sulfonsäuregruppen zwischen 0,1:1 und 10:1, vorzugsweise zwischen 0,6:1 und 5:1 liegt. Es ist selbstverständlich auch möglich, einen größeren Überschuß an Di- bzw. Tetrahydrofuran einzusetzen, wobei bieser Überschuß die Funktion eines Lösungsmittels übernimmt, welches im Anschluß an die Umsetzung durch Destillation wieder entfernt werden kann. Selbst bei Verwendung von äquivalenten oder überschüssigen Mengen an Di- bzw. Tetrahydrofuranen wird wegen der Reaktionsträgheit des an sich stabilen Furan-Rings im allgemeinen nur eine teilweise Veresterung erreicht. Diese ist jedoch ausreichend, um z.B. feste, hochschmelzende Isocyanatosulfonsäuren in Lösung zu bringen, bzw. in flüssige homogene Polyisocyanate zu überführen.

Eine vollständige Veresterung der vorliegenden Sulfonsäuregruppen wird im allgemeinen nur bei Anwendung eines molaren Überschüßes an Furan-Derivat und bei Anwendung erhöhter Temperaturen erreicht.

Im allgemeinen erfolgt die Durchführung des erfindungsgemäßen Verfahrens im Temperaturbereich von 0—190°C, vorzugsweise zwischen 20 und 140°C. Falls eine vollständige Veresterung angestrebt wird, empfiehlt sich eine Reaktionstemperatur zwischen 50 und 140°C während einer Zeitdauer von vorzugsweise 1 bis 12 Stunden. Im übrigen kann die Dauer der Umsetzung in weiten Grenzen schwanken und auch mehrere Tage betragen.

Bei diskontinuierlicher Fahrweise wird das Polyisocyanat vorzugsweise bei Raumtemperatur in einem Rührgefäß vorgelegt und das Di- bzw. Tetrahydrofuran eingerührt. Wenn der Anteil an Sulfonsäure-Gruppen im Polyisocyanat mehr als ca. 10% beträgt, kann es zweckmäßig sein, die Reaktion bei tieferen Temperaturen, z.B. zwischen 0 und 20°C, durchzuführen und gegebenenfalls unter Kühlung zu arbeiten. Eine solche Maßnahme ist jedoch im Regelfall nicht erforderlich, da eine Erwärmung des Reaktionsgemisches auf beispielsweise 140°C oder auch darüber nicht von Nachteil ist. Die Reaktion wird vorzugsweise lösungsmittelfrei durchgeführt, jedoch kann selbstverständlich auch in Anwesenheit inerter Lösungsmittel, wie z.B. Dichloräthan, Chloroform, Tetrachloräthan, Trichlorfluormethan, Aceton, Toluol, Chlorbenzol gearbeitet werden.

Die Umsetzung fester Polyisocyanatsulfonsäuren mit Di- oder Tetrahydrofuranen ist unproblematisch, da während der Reaktion die festen Sulfonsäuren rasch in Lösung gehen. Die Verfahrensprodukte sind daher im Regelfall homogene Flüssigkeiten oder hochviskose bis feste Harze. Im Falle nur partieller Umsetzung mit dem Tetra- bzw. Di-hydrofuran können auch Dispersionen erhalten werden, welche noch feste Isocyanatosulfonsäure enthalten.

Nach einer besonders bevorzugten Arbeitsweise werden Lösungen der Isocyanatosulfonsäuren in organischen Phosphaten für die Umsetzung eingesetzt. Anstelle von Phosphaten können auch organische Phosphite, Phosphonate und Pyrophosphate eingesetzt werden. Vorzugsweise wird bereits die Sulfonierung in Gegenwart der Phosphate durchgeführt und unmittelbar anschließend die erfindungsgemäße Umsetzung vorgenommen. Kommen saure organische Phosphate zum Einsatz oder sind im Anschluß an die Sulfonierung Umesterungsreaktionen zwischen Isocyanatosulfonsäure und Phosphat eingetreten, so kann auch die OH-Gruppe des Phosphats mit dem Di- oder Tetrahydrofuran reagieren, was bei der Berechnung der Mengenverhältnisse zu berücksichtigen ist.

Geeignet Phosphate, Phosphite, Phosphonate oder Pyrophosphate sind beispielsweise in der DT—OS 2 510 693 genannt. Besonders bevorzugt ist Tris-(2-chloräthyl)-phosphat.

Es ist besonders vorteilhaft, die Umsetzung von Isocyanatoarylsulfonsäuren mit Di- bzw. Tetrahydrofuranen unmittelbar im Anschluß an die Sulfonierungsreaktion durchzuführen. Diese Verfahrensweise hat den besonderen Vorteil, daß sich eine Isolierung der äußerst feuchtigkeitsempfindlichen freien Isocyanatoarylsulfonsäuren erübrigt. So besteht eine besonders bevorzugte Verfahrensweise darin, das Polyisocyanat, z.B. Toluylendiisocyanat oder Diisocyanatodiphenylmethan in einem Lösungsmittel, wie Chlorbenzol, zu sulfonieren und die dabei gebildete Suspension mit einem Di- oder Tetrahydrofuran umzusetzen. Da üblicherweise auch die Phosgenierungsreaktion zur Herstellung des Polyisocyanats in einem inerten Lösungsmittel wie Chlorbenzol vorgenommen wird, können Phosgenierung, Sulfonierung und Veresterung unmittelbar hintereinander vorgenommen werden, ohne daß eine der Zwischenstufen isoliert zu werden braucht. Man erhält so, vom entsprechenden Diamin ausgehend direkt die erfindungsgemäßen Verfahrensprodukte als Lösung bzw. Dispersion in dem verwendeten Lösungsmittel.

Falls nur weniger als ca. 50% des Polyisocyanats sulfoniert und verestert werden soll, kann man auch in Abwesenheit von organischen Lösungsmitteln arbeiten. Die Sulfonierung führt dann zu einer Suspension des sulfonierten Polyisocyanats in unverändertem Ausgangsisocyanat. Während der Umsetzung mit dem Di- bzw. Tetrahydrofuran geht im allgemeinen die suspendierte feste Phase in Lösung und man erhält eine Lösung des Sulfonsäure-esters in Ausgangsisocyanat. Bedingt durch des hohe Verhältnis der NCO-Gruppen zu den $SO_3H$-Gruppen ist in diesem Fall das Molekulargewicht der Isocyanato-arylsulfonsäureester niedriger als bei vollständiger Sulfonierung des Polyisocyanats.

Beispielsweise lassen sich nach der lösungsmittelfreien Methode viskose Lösungen von mit Sulfonsäureester-Gruppen modifizierten Toluylendiisocyanat herstellen. Diese Lösungen können als solche anstelle von nichtmodifiziertem Toluylendiisocyanat eingesetzt werden, man kann aber auch das freie Toluylendiisocyanat abdestillieren und das harzartige Sulfonsäure-ester-isocyanat isolieren. Dieses kann als solches, beispielsweise in Pulverlacken oder aber gelöst in Lösungsmitteln oder in beliebigen, auch aliphatischen Polyisocyanaten gelöst, Verwendung finden.

Bei Einsatz roher Phosgenierungsprodukte von Anilin-Formaldehyd-Kondensaten als Polyisocyanat empfiehlt sich die lösungsmittelfreie Methode nur, wenn weniger als ca. 30% und insbesondere 5—20% des Polyisocyanats sulfoniert und mit Di. bzw. Tetrahydrofuran umgesetzt werden, da sowohl die Sulfonierung als auch die Veresterung, an die sich im Regelfall eine Urethanisierung anschließt, von

erheblicher Viskositätserhöhung begleitet werden.

Soll ein höherer Sulfonierungsgrad erreicht werden, so empfiehlt es sich auch hier die Mitverwendung eines inerten Lösungsmittels oder die Durchführung der Sulfonierung unmittelbar im Anschluß an die Phosgenierung vor Abdestillieren des zur Phosgenierung verwendeten Lösungsmittels.

Bei der Umsetzung der Isocyanatoarylsulfonsäuren mit Di- bzw. Tetrahydrofuran ist zu beachten, daß der erste Reaktionsschritt die Ringöffnung des Heterocyclus unter Veresterung sehr rasch erfolgt. Der zweite Reaktionsschritt, die Reaktion der dabei gebildeten OH-Gruppe mit vorhandenen Isocyanat-Gruppen verläuft demgegenüber wesentlich langsamer. Dies hat zur Folge, daß der Viskositätsanstieg nur langsam erfolgt, und zur Beschleunigung des zweiten Reaktionsschritts höhere Temperatur und/oder Katalysatoren wie z.B. metallorganische Verbindungen wie Zinndioctoat oder Dibutylzinndilaurat verwendet werden können.

Wie bereits eingangs ausgeführt, entstehen beim erfindungsgemäßen Verfahren im allgemeinen freie Isocyanatgruppen und Urethangruppen aufweisende modifizierte Polyisocyanate, die zu den entsprechenden, Allophanatgruppen aufweisenden Kompositionen weiter reagieren können. In Abwesenheit von eine derartige Allophanatbildung beschleunigenden Katalysatoren ist jedoch diese Folgereaktion (dritte Stufe des erfindungsgemäßen Verfahrens) nicht oder nur in sehr untergeordnetem Umfang zu beobachten, es sei denn, die erfindungsgemäßen Verfahrensprodukte werden über einen längeren Zeitraum auf erhöhte, d.h. beispielsweise über 100°C liegende Temperaturen erhitzt. Eine Allophanatbildung kann jedoch zur Erhöhung der NCO-Funktionalität durchaus erwünscht sein. In einem solchen Falle empfiehlt sich der Einsatz von die Allophanatbildung aus Urethangruppen und Isocyanatgruppen beschleunigenden Katalysatoren der beispielsweise in DT—OS 2 040 645 bzw. US—PS 3 769 318 beschriebenen Art. Ein typisches Beispiel eines derartigen Katalysators ist Zink-acetyl-acetonat.

Die erfindungsgemäßen Verfahrensprodukte sind wertvolle Ausgangsmaterialien zur Herstellung von Polyurethankunststoffen nach dem Isocyanat-Polyadditionsverfahren. Sie eignen sich z.B. zur Herstellung von kompakten oder zelligen Elastomeren, Weichschäumen, Halbhartschäumen und Hartschäumen, insbesondere dann, wenn hohe Anforderungen an die Vernetzungsdichte, das Brandverhalten oder die Abbaubarkeit gestellt werden. So eignen sich die erfindungsgemäßen Polyisocyanate beispielsweise zur Herstellung von Polstermaterialien, Matratzen, elastischen Unterlagen, Autositzen, Dämpfungsmaterialien, Stoßabsorbern, Konstruktionswerkstoffen, schalldämmenden Isolierungen, feuchtigkeitsaufnehmenden Materialien, z.B. im Hygienesektor, zur Herstellung von Substraten zur Pflanzenaufzucht, sowie für den Wärme- und Kälteschutz. Ganz besonders geeignet sind die erfindungsgemäßen Polyisocyanate zur Herstellung anorganisch-organischer Kunststoffe, beispielsweise in Analogie zu den in DBP 2 310 559, DT—OS 2 227 147, 2 359 608 beschriebenen Verfahrensweise, sowie für Oberflächenbeschichtungen, Imprägnierungen und Verklebungen. Durch Dispergieren der erfindungsgemäßen Polyisocyanate in Wasser, gegebenenfalls in Gegenwart von Basen lassen sich wäßrige Emulsionen herstellen.

In den nachstehenden Beispielen 1—8 wurden folgende Isocyanatoarylsulfonsäuren eingesetzt (alle Prozentangaben beziehen sich auf Gewichtsprozente):

*Sulfoniertes Polyisocyanat I:*

Uretdion der Diisocyanatotoluolsulfonsäure (hergestellt aus Toluylendiisocyanat, Isomerengemisch 2.4:2.6 = 80:20 und Schwefeltrioxyd), 76 %iges Feuchtpulver mit Toluol (hergestellt gemäß deutscher Patentanmeldung P 26 40 103.6 Beispiel 1).

*Sulfoniertes Polyisocyanat II:*

2000 g eines Gemisches aus 60 % 2.4-Diisocyanatodiphenylmethan und 40 % 4.4'-Diisocyanatodiphenylmethan wurden bei Raumtemperatur mit einem Schwefeltrioxid/Stickstoffstrom begast bis ca. 73 g Schwefeltrioxyd aufgenommen worden waren. Das Produkt hatte eine Viskosität von 120 cP 25°C, einen Schwefelgehalt von 1,25 % und einen NCO-Gehalt von 30,1 %, Säure-Gehalt: 32,2 Milliäquivalente pro 100 g.

*Sulfoniertes Polyisocyanat III:*

Vom rohen Phosgenierungsprodukt eines Anilin/Formaldehyd-Kondensats wird soviel 2-Kernanteil abdestilliert, daß der Destillationsrückstnad bei 25°C eine Viskosität von 400 cP aufweist. Das erhaltene Produkt wird unter Rühren durch Überleiten eines Schwefeltrioxid/Stickstoff-Gemisches auf einen Schwefelgehalt von 0,96 % sulfoniert. Nach ca. 8 Monaten beträgt die Viskosität 5000 cP bei 25°C. NCO-Gehalt 29,2 %, Säure-Gehalt 31,5 Milliäquivalente pro 100 g.

Beispiel 1

In 500 g (ca. 2 Mol) des sulfonierten Polyisocyanats II werden 14,2 g (0,2 Mol) Tetrahydrofuran bei 25°C eingerührt. Nach 4 Tagen beträgt die Viskosität 95 cP, nach 24 Tagen 100 cP, NCO-Gehalt 28,4 %, Säure-Wert: 14,7 Milliäquivalente pro 100 g. Viskosität nach 2 Monaten: 130 cP/25°C.

Beispiel 2

In 600 g des sulfonierten Polyisocyanats III werden 15,6 g Tetrahydrofuran eingerührt. Nach 4 Tagen beträgt die Viskosität 3300 cP,

nach 24 Tagen 3500 cP/25°C, NCO-Gehalt: 28,5 %, Säure-Wert: 21,9 Milliäquivalente pro 100 g.

Beispiel 3

500 g des nach Beispiel 2 erhaltenen Produkts werden 2 1/2 Stunden bei 100°C gehalten und das Produkt anschließend abgekühlt. Anschließend werden folgende Daten gemessen: Viskosität 4200 cP/25°C, NCO-Gehalt: 27,8 %, Säure-Wert: 17,8 Milliäquivalente pro 100 g. Die Abnahme des Säure-Wertes gegenüber dem Ausgangsmaterial zeigt die Reaktivität mit dem Tetrahydrofuran an. Der tatsächliche Säure-Wert der Tetrahydrofuran-Umsetzungsprodukte dürfte noch niedriger liegen; es muß berücksichtigt werden, daß bei der Bestimmung des Säure-Wertes ein Teil der Sulfonsäureestergruppen hydrolytisch gespalten wird.

Beispiel 4

65,9 g des sulfonierten Polyisocyanats I (entsprechend 50 g Trockensubstanz) werden mit 100 g Toluylendiisocyanat (Isomerengemisch 2.4:2.6 = 80:20) und 16,5 g Tetrahydrofuran vermischt (120 % bezogen auf Sulfonsäure-Gruppen). Die Suspension wird auf 70°C erhitzt und 2 Stunden bei dieser Temperatur gehalten. Anschließend wird die Temperatur innerhalb von 6 Stunden langsam auf 100°C erhöht, währenddessen die Sulfonsäure langsam in Lösung geht. Das Reaktionsprodukt wird bei Raumtemperatur durch ein engmaschiges Metallsieb filtriert (0,4 g Rückstand) und anschließend noch vorhandenes Toluol im Vakuum abdestilliert. Das Reaktionsprodukt ist schwach trüb, dickflüssig und scheidet auch nach längerer Lagerung keinen festen Niederschlag aus. NCO-Gehalt: 36,3 %, Säure-Wert: 22 Milliäquivalente pro 100 g Das Produkt ist hydrophob und mit kaltem Wasser nicht mischbar.

Beispiel 5

Es wird gemäß Beispiel 4 verfahren, jedoch unter Einsatz von 131,8 g des sulfonierten Polyisocyanats I (entsprechend 100 g Trockensubstanz), 100 g Toluylendiisocyanat und 33 g Tetrahydrofuran. Das Reaktionsprodukt ist deutlich viskoser als das gemäß Beispiel 4, scheidet jedoch auch nach längerer Lagerung keinen festen Niederschlag aus. NCO-Gehalt: 30,1 %, Säure-Gehalt: 34,9 Milliäquivalente pro 100 g.

Beispiel 6

Es wird gemäß Beispiel 4 verfahren, jedoch unter Einsatz von 131,8 g sulfonierten Polyisocyanats I (entsprechend 100 g Trockensubstanz). 50 g Toluylendiisocyanat und 33 g Tetrahydrofuran. Das erhaltene Reaktionsprodukt ist bei 60°C hochviskos und nach Abkühlung auf Raumtemperatur nicht mehr fließend. NCO-Gehalt: 28,1 %, Säure-Wert: 52,8 Milliäquivalente pro 100 g.

Beispiel 7

65,9 g des sulfonierten Polyisocyanats I (ensprechend 50 g Trockensubstanz) werden bei Raumtemperatur in 140 ml Tetrahydrofuran gelöst. Anschließend wird das Gemisch 2 Stunden bei 70°C unter Rückfluß gekocht. Nach Abfiltrieren von 1 g unlöslichem Rückstand wird im Vakuum das Tetrahydrofuran und der größte Teil des Toluols abdestilliert (Heizbadtemperatur bis 90°C). Es wird ein in Dimethylsulfoxid lösliches Harz erhalten, welches noch erhebliche Anteile an Sulfonsäuregruppen enthält. NCO-Gehalt: 17,8 %, Säure-Gehalt 157,6 Milliäquivalente pro 100 g.

Beispiel 8

Es wird wie in Beispiel 7 verfahren, jedoch wird das Tetrahydrofuran im Verlauf von ca. 4 Stunden langsam bei Normaldruck abdestilliert, wobei die Innentemperatur bis auf 80°C ansteigt. Die letzten Reste Tetrahydrofuran werden anschließend im Wasserstrahlvakuum entfernt. Während des Abdestillierens von Tetrahydrofuran steigt die Viskosität der Lösung sehr stark an, die Masse ist schließlich nicht mehr rührbar und es wird ein schwach vernetztes hochmolekulares elastomeres Polyisocyanat erhalten. Das Produkt ist in organischen Lösungsmitteln unlöslich, geht jedoch beim Erwärmen mit Wasser unter $CO_2$-Entwicklung und Hydrolyse in Lösung.

**Patentansprüche**

1. Verfahren zur Herstellung von modifizierten, Sulfonsäurealkylester-Gruppen aufwiesenden Polyisocyanaten, deren Isocyanatgruppen zumindest teilweise in dimerisierter Form vorliegen können, dadurch gekennzeichnet, daß man mindestens zwei Isocyanatgruppen aufweisende Isocyanatoarylsulfonsäuren, deren Isocyanatgruppen zumindest teilweise in dimerisierter Form vorliegen können, gegebenenfalls im Gemisch mit Sulfonsäuregruppen-freien Mono- und/oder Polyisocyanaten bei 0—190°C mit Di- und/oder Tetrahydrofuranen umsetzt, wobei man Art und Mengenverhältnisse der Reaktionspartner so wählt, daß das Äquivalentverhältnis der Gesamtmenge der Isocyanatgruppen einschließlich der gegebenenfalls in dimerisierter Form vorliegenden Isocyanatgruppen zu Sulfonsäuregruppen >1 ist und das Äquivalentverhältnis von Di- bzw. Tetrahydrofurangruppen zu Sulfonsäuregruppen zwischen 0,1 und 10 liegt.

2. Verfahren gemäß Anspruch 1, dadurch gekennzeichnet, daß man Sulfonsäuregruppen-freie aromatische Polyisocyanate in einem ersten Reaktionsschritt in an sich bekannter Weise sulfoniert und das bei dieser Sulfonierung anfallende zumindest teilweise aus Isocyanatoarylsulfonsäuren bestehende Polyisocyanatgemisch ohne weitere Aufarbeitung mit Di- oder Tetrahydrofuranen umsetzt.

3. Verwendung der gemäß Anspruch 1 und 2

zugänglichen modifizierten Polyisocyanate als Ausgangsmaterial zur Herstellung von oligomeren oder polymeren Polyadditionsprodukten.

## Revendications

1. Procédé de préparation de polyisocyanates modifiés comportant des groupes d'esters alkyliques d'acides sulfoniques et dont les groupes isocyanate peuvent se présenter au moins partiellement sous forme dimérisée, caractérisé en ce qu'on fait réagir des acides isocyanatoarylsulfoniques comportant au moins deux groupes isocyanate et dont les groupes isocyanate peuvent se présenter au moins partiellement sous forme dimérisée, éventuellement en mélange avec des mono-isocyanates et/ou des polyisocyanates exempts de groupes d'acides sulfoniques, à 0—190°C, avec du dihydrofuranne et/ou du tétrahydrofuranne, le type et les rapports quantitatifs des partenaires réactionnels étant choisis de telle sorte que le rapport équivalent entre la quantité totale des groupes isocyanate, y compris des groupes isocyanate éventuellement présents sous forme dimérisée, et les groupes d'acides sulfoniques soit supérieur à 1 et que le rapport équivalent entre les groupes dihydrofuranne ou tétrahydrofuranne et les groupes d'acides sulfoniques se situe entre 0,1 et 10.

2. Procédé suivant la revendication 1, caractérisé en ce que, au cours d'une première étape réactionnelle, on soumet des polyisocyanates aromatiques exempts de groupes d'acides sulfoniques à une sulfonation de façon connue en soi et, sans traitement complémentaire, on fait réagir le mélange de polyisocyanates obtenu lors de cette sulfonation et constitué au moins partiellement d'acides isocyanatoarylsulfoniques avec du dihydrofuranne ou du tétrahydrofuranne.

3. Utilisation des polyisocyanates modifiés obtenus suivant les revendications 1 et 2 comme matière de départ pour la préparation de produits de polyaddition oligomères ou polymères.

## Claims

1. Process for the preparation of modified polyisocyanates which contain sulphonic acid alkyl ester groups and in which the isocyanate groups may be at least partly in the dimerised form, characterised in that isocyanatoarylsulphonic acids which have at least two isocyanate groups and in which the isocyanate groups may be at least partly in the dimerised form are reacted, optionally as mixtures with mono- and/or polyisocyanates which are free from sulphonic acid groups, with di- and/or tetrahydrofurans at from 0 to 190°C, the nature and proportions of the reactants being chosen so that the equivalent ratio of the total quantity of isocyanate groups, including any isocyanate groups present in the dimerised form, to sulphonic acid groups is greater than 1 and the equivalent ratio of di- or tetrahydrofuran groups to sulphonic acid groups is between 0.1 and 10.

2. Process according to claim 1, characterised in that in a first reaction step, aromatic polyisocyanates which are free from sulphonic acid groups are sulphonated in known manner, and the polyisocyanate mixture which is obtained from this sulphonation and which consists at least partly of isocyanatoarylsulphonic acids is reacted with di- or tetrahydrofuran, without being first worked up.

3. Use of modified polyisocyanates obtainable according to claims 1 and 2 as starting material for the production of oligomeric or polymeric polyaddition products.